# FASCICULE DE BREVET EUROPEEN

(11) **EP 0 589 743 B1**
(45) Date de publication et mention de la délivrance du brevet: **17.12.1997**
(21) Numéro de dépôt: 93402148.6
(22) Date de dépôt: 02.09.1993
(51) Int. Cl.: G06F 13/38, G06F 13/40

(54) **Dispositif modulaire permettant le couplage et le multiplexage de bus de différents types**
Modulare Vorrichtung zum Koppeln und zum Multiplexen von unterschiedlichen Bussen
Modular device for coupling and multiplexing different type buses

(30) Priorité: 24.09.1992 FR 9211378
(43) Date de publication de la demande: 30.03.1994
(73) Titulaire: SEXTANT AVIONIQUE, F-92366 Meudon la Forêt Cédex (FR)
(72) Inventeur: Nigen, Claude, F-78150 Le Chesnay (FR); Ferret, Jacques, 75014 Paris (FR)
(74) Mandataire: de Saint-Palais, Arnaud Marie

(56) Documents cités:
- EP-A- 0 394 114
- FR-A- 2 568 389
- ELECTRONIC ENGINEERING vol. 52, no. 642 , Septembre 1980 , LONDON GB pages 111 - 122 SAWYER ET EL. 'New concepts in single board computers'

## Description

La présente invention concerne un dispositif de couplage de bus permettant l'interfaçage entre un bus de transfert de données numérique et à au moins un bus numérique ou une ligne analogique.

Elle s'applique notamment à la connexion d'une unité de traitement de données à base de processeurs et de mémoires, à différents organes périphériques dont les bus ne sont pas compatibles. Ces bus peuvent être analogiques aussi bien que numériques, du type série comme par exemple, les lignes V24 ou 1553, ou bien du type parallèle comme les bus VME.

Généralement, chaque type de connexion de bus est réalisé selon une architecture matérielle spécifique et un protocole de communication définissant comment s'effectue le transfert des données. En réception de données, ce protocole concerne la désérialisation (le cas échéant) et le décodage des données pour les rendre exploitables par une unité de traitement. En émission, il concerne le codage des données et la sérialisation de celles-ci, si besoin est.

Dans les applications de traitement de données, il est courant d'avoir besoin de faire communiquer deux organes utilisant des bus de types différents. Pour parvenir à ce résultat, on utilise généralement une carte de couplage qui réalise entre les deux bus, un interfaçage à la fois sur le plan électrique et sur le plan logique pour tenir compte du protocole de communication utilisé sur chaque bus.

Lorsqu'une unité de traitement doit pouvoir échanger des données avec des organes externes mettant en oeuvre des bus de types quelconques, il est connu d'utiliser une carte de couplage pour chaque bus à connecter, en vue d'établir la connexion du bus local de l'unité de traitement avec les bus externes.

Cette solution pose souvent des problèmes d'encombrement notamment lorsque l'unité de traitement doit communiquer avec un grand nombre de bus externes.

Ce problème devient crucial, du fait de la grande diversité de types de bus existant aujourd'hui. D'autre part, les utilisateurs de ce type de matériel présentent bien souvent, des besoins spécifiques, ce qui peut les amener, pour un bus d'un type donné, à modifier le protocole de communication.
Dans ce contexte, il est alors nécessaire de développer une nouvelle carte de couplage pour chaque type de couplage à réaliser.
Cette méthode manque de souplesse et conduit à multiplier les développements de cartes électroniques qui s'avèrent longs et coûteux.
L'invention a pour but de supprimer ces inconvénients. Elle propose à cet effet un dispositif de couplage d'un premier bus numérique de transfert de données avec au moins un second bus de type quelconque, ledit dispositif comprend :
- une carte de couplage assurant le transfert de données entre le premier bus et le second bus,
- au moins un module enfichable dans la carte de couplage connecté au second bus, et qui regroupe les caractéristiques électriques et logiques de ce dernier;
ladite carte de couplage comprend :
- au moins une interface programmable connectée au premier bus, capable de s'adapter au protocole de communication du second bus, et
- des moyens de connexion capables de connecter le module enfichable à l'interface programmable,
caractérisé en ce que ladite interface programmable comprend au moins un composant intégrant des cellules logiques organisées en matrices et des cellules d'entrées/sorties, les interconnexions entre les cellules étant déterminées par des informations stockées dans une mémoire non volatile située sur le module enfichable.

Ainsi, une carte de couplage peut être utilisée pour connecter le premier bus à un autre bus de n'importe quel type en utilisant le module enfichable adéquat. Donc, à chaque fois qu'un utilisateur a besoin d'effectuer un nouveau couplage, il n'est plus nécessaire de développer une carte de couplage complète, mais il suffit simplement de réaliser un module enfichable spécifique du bus à connecter.

Selon une particularité de l'invention, l'interface programmable comprend des moyens pour lire les informations stockées dans la mémoire non volatile de manière à configurer les interconnexions entre ses cellules, lors de sa mise sous tension.

Cette interface permet d'effectuer une sérialisation et un codage de données pour un transfert de données du premier bus vers le second, et une désérialisation et un décodage de données pour un transfert inverse.

Avantageusement, un ensemble de paramètres nécessaires à la configuration de l'interface programmable est transmis à cette dernière lors de sa mise sous tension, par l'intermédiaire du premier bus.
De cette manière, l'interface programmable peut facilement s'adapter aux différentes caractéristiques d'utilisation du second bus.
Ces différents paramètres peuvent être, par exemple pour une ligne V24, du type fréquence de ligne, format et codage des données, nombre et motifs des mots de synchronisation. Ils sont transmis à l'interface programmable par l'unité de traitement lors de son initialisation. Les informations chargées dans l'interface lui permettent de configurer une fonction particulière assurant la réception et la prise en compte de ces paramètres.

Les avantages de cette solution sont considérables en termes de coût de réalisation et de souplesse d'utilisation, le dispositif pouvant être reconfiguré simplement, soit en changeant les valeurs des paramètres, soit en remplaçant le module enfichable.

Selon une particularité de l'invention, le dispositif comprend les moyens de connexion nécessaires pour pouvoir recevoir simultanément plusieurs modules enfichables connectés chacun à au moins un bus de type quelconque, chacun de ces moyens de connexion étant relié à une interface programmable standard connectée au premier bus pour pouvoir échanger des données avec une unité de traitement.

Grâce à cette disposition, une seule et unique carte de couplage est nécessaire pour connecter simultanément plusieurs bus qu'ils soient de mêmes types ou non. Cette solution permet donc, d'une part, de réduire l'encombrement des différents circuits de couplage, et d'autre part, de n'utiliser qu'un seul moyen de connexion de l'unité de traitement.

Lorsque l'interface matérielle à réaliser sur un module est complexe et donc relativement encombrante, il est possible d'utiliser deux emplacements de modules enfichables du dispositif.

Le dispositif selon l'invention est également capable d'établir la connexion avec une ligne analogique. Pour cela, il suffit d'incorporer dans le module enfichable à réaliser, un convertisseur analogique/numérique entre l'interface matérielle située sur le module et l'interface programmable.

Un mode d'exécution de l'invention sera décrit ci-après, à titre d'exemple non limitatif, avec référence aux dessins dans lesquels :
la figure 1 est une représentation schématique d'une carte de couplage avec un bus de type numérique ;
la figure 2 est une représentation schématique d'une carte de couplage avec une ligne d'acquisition analogique ;
la figure 3 représente une carte de couplage capable de recevoir plusieurs modules enfichables assurant la connexion avec des bus différents ;
la figure 4 représente le schéma électronique simplifié d'une carte de couplage capable de recevoir quatre modules ;
la figure 5 représente le schéma électronique simplifié d'un module permettant de raccorder quatre lignes RS422.

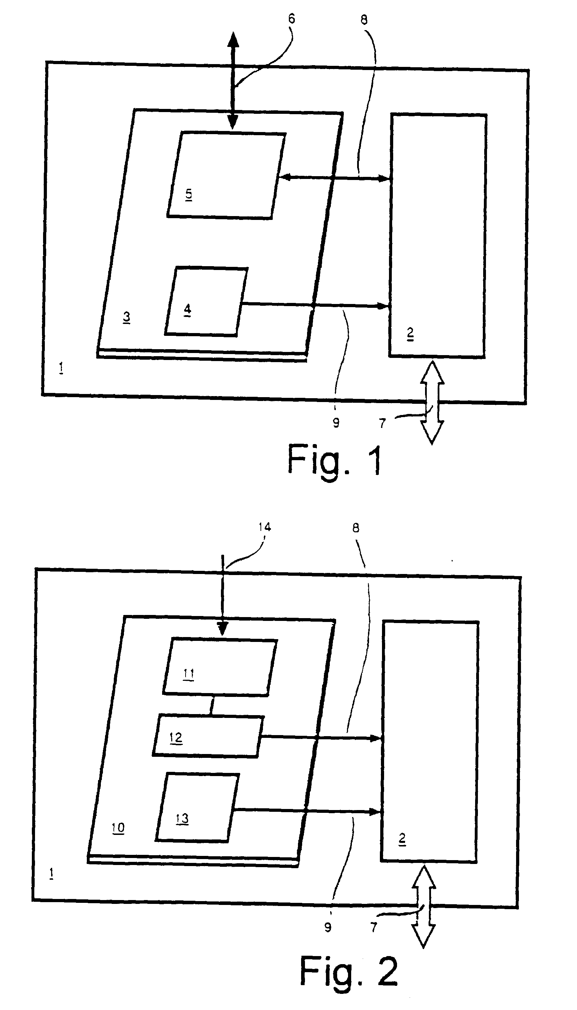

Sur la figure 1, la carte de couplage 1 comprend une interface programmable 2 et des moyens de connexion 8, 9 lui permettant de recevoir un module enfichable 3. Ce module 3 comprend une mémoire non volatile 4 de type PROM dans laquelle sont stockées des informations destinées à être chargées dans l'interface programmable 2 par l'intermédiaire d'une liaison série 9, au moment de la mise sous tension de la carte de couplage. Le module enfichable 3 comprend également un circuit 5 réalisant l'interface électrique avec le bus numérique 6 à connecter, ce bus 6 pouvant être de type série comme les lignes PCM, V24, RS232, RS422, ARINC et 1553 ou parallèle comme le bus VME.

L'interface programmable 2 est connectée à un bus 7, par exemple de type VME, lui permettant de communiquer avec une unité de traitement de données. Elle est constituée d'un composant de type FPGA (matrice de portes logiques programmable) intégrant des cellules logiques organisées en matrices, ainsi que des cellules d'entrées/sorties, où les interconnexions entre les cellules sont configurées par les informations stockées dans la mémoire non volatile 4. Ce composant appartient, par exemple, à la famille XC4000 fabriquée par la société XILINX.

En acquisition, les données sont transmises par le circuit 5 et la ligne 8, du bus 6 vers l'interface programmable 2 qui assure leur désérialisation et leur décodage. Ces données sont ensuite mises en forme suivant un format déterminé compatible avec le bus 7 avant d'y être transférées à destination d'une unité de traitement.

En émission, les données parcourent le chemin inverse. Elles circulent tout d'abord sur le bus 7. Puis elles sont codées et sérialisées par l'interface programmable 2, avant d'être envoyées sur la ligne série 8 à destination du circuit 5 puis du bus 6.

La figure 2 représente la carte de couplage 1 comprenant l'interface programmable 2 et dans laquelle est enfiché le module 10. Comme précédemment, ce module 10 comprend une mémoire 13 de type PROM contenant les informations à charger dans l'interface programmable 2 et un circuit 11 réalisant l'interface électrique avec la ligne 14 de type analogique. Comme l'interface programmable 2 n'est capable de recevoir que des données de type numérique sur la ligne série 8, un convertisseur 12 analogique / numérique est intercalé entre le circuit 11 et la ligne série 8.

Dans cette configuration (figure 2), la carte de couplage 1 fonctionne de la même façon que dans le cas où le bus à connecter est de type numérique (figure 1).

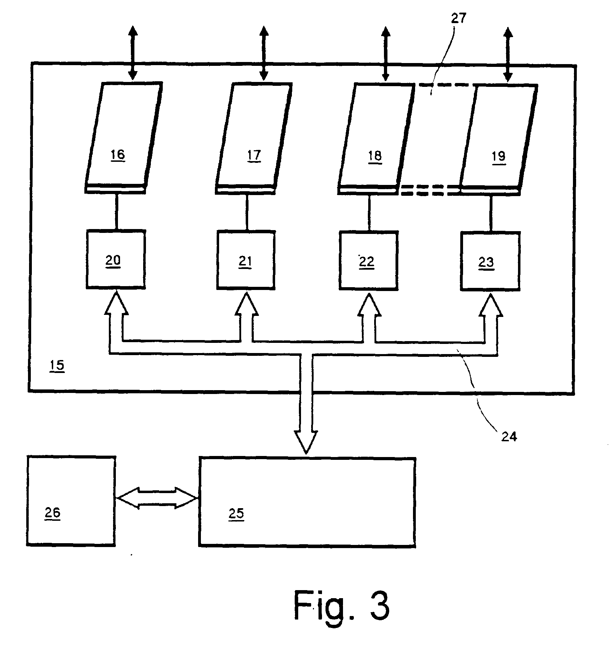

Selon un mode de réalisation préféré (figure 3), la carte de couplage 15 permet de réaliser le couplage avec plusieurs bus simultanément (quatre sur la figure), ces bus pouvant être de type différents. Pour cela, elle comprend quatre interfaces programmables 20 à 23 pouvant être associées à quatre modules enfichables 16 à 19. Les quatre interfaces programmables 20 à 23 sont connectées au même bus 24 leur permettant d'échanger les données, alors de même format, avec l'unité de traitement 25.

L'initialisation de la carte de couplage 15 s'effectue d'une manière similaire à celle décrite précédemment, les informations stockées au niveau des modules enfichables 16 à 19 sont chargées respectivement dans les interfaces programmables 20 à 23.

Le bus 24 est en fait constitué de 2 bus parallèles de 16 bits, un bus dédié à l'acquisition de données et un bus dédié à l'émission de données, de manière à simplifier la gestion des demandes d'accès au bus et à obtenir un haut débit de transmission de données entre la carte de couplage 15 et l'unité de traitement 25. Selon ce schéma, chaque donnée est codée sur 16 bits et est associée, dans le cas des acquisitions, à un mot de contrôle de 16 bits permettant, tout d'abord, d'identifier le bus origine de la donnée à partir :
- du numéro de carte de couplage de manière à permettre la connexion de plusieurs cartes de couplage à la même unité de traitement,
- du numéro du module sur la carte de couplage (de 0 à 3 dans l'exemple de la figure 3), et
- du numéro de ligne du module de manière à permettre qu'un module enfichable soit connecté, à la fois, à plusieurs bus de même type (par exemple de type ARINC),

Ce mot de contrôle fournit, ensuite, des informations sur la donnée elle-même concernant le type de la donnée dans le protocole du type de bus acquis, comme par exemple, mot de commande, status ou identificateur de message.

Il donne, en outre, des indications sur la qualité de la transmission, comme par exemple, le type de l'erreur détectée le cas échéant.

L'unité de traitement 25 comprend une pile de type FIFO (premier entré - premier sorti) dans laquelle sont empilés tous les mots arrivant par le bus 24 dédié à l'acquisition. L'unité de traitement 25 comprend également un processeur rapide, par exemple, de type RISC (processeur à jeu d'instructions réduit) pour pouvoir lire et traiter les données écrites dans cette pile suffisamment rapidement afin d'éviter la saturation de cette dernière.

Selon cette configuration, un certain nombre de paramètres nécessaires à la configuration des interfaces programmables 20 à 23 peut provenir d'une autre source que la mémoire non volatile d'un module enfichable de manière à pouvoir s'adapter aux différentes utilisations possibles des bus connectés sans avoir besoin de changer de module enfichable.

Pour chacun des quatre bus, ces paramètres sont saisis au niveau de la station de travail 26, puis transférés à l'unité de traitement 25 qui les mémorise et les transmet à l'interface programmable correspondante par l'intermédiaire du bus 24 dédié à l'émission.

Les informations chargées respectivement dans les interfaces programmables 20 à 23 permettent alors de configurer ces dernières de manière à les rendre capables de recevoir ces paramètres et de les utiliser pour configurer leurs fonctions d'acquisition et d'émission.

Par exemple, pour une ligne série de type V24, ces paramètres définissent :
- la fréquence de ligne,
- le nombre de bits dans un mot,
- le nombre de bits d'arrêt,
- le nombre de mots de synchronisation,
- la valeur de ces mots de synchronisation,
- le type de codage de ligne,
- la signification du bit de parité (bit de parité, donnée ou sans signification), et
- la position de l'identificateur du message dans la trame.

L'unité de traitement 25 comporte une mémoire de type EEPROM où des données peuvent être écrites par programme et conservées même en l'absence de tension. Cette mémoire permet de garder les dernières valeurs des paramètres saisis par l'utilisateur sur la station de travail 26, afin de les transmettre aux différentes cartes d'interface 20 à 23, lors de l'initialisation de l'unité de traitement 25 et de la carte de couplage 15. Lorsque l'initialisation de l'unité de traitement 25 est terminée, ainsi que le chargement des informations stockées au niveau des modules enfichables 16 à 19 dans les interfaces programmables 20 à 23, l'unité de traitement 25 lit cette mémoire EEPROM et transmet son contenu aux différentes interfaces programmables 20 à 23 par l'intermédiaire du bus d'émission 24.

Cette configuration (figure 3) permet, par exemple, d'espionner trois bus et d'émettre les données lues sur le quatrième bus, la station de travail 26 permettant à un opérateur de piloter l'unité de traitement 25 et indirectement, la carte de couplage 15.

Cette configuration permet également de connecter un bus nécessitant une interface complexe et donc encombrante car un module enfichable 27 (représenté en traits interrompus sur la figure 3) peut occuper l'emplacement de deux modules 18, 19 sur la carte de couplage 15. Le module 27 peut alors utiliser une seule ou les deux interfaces programmables 22, 23.

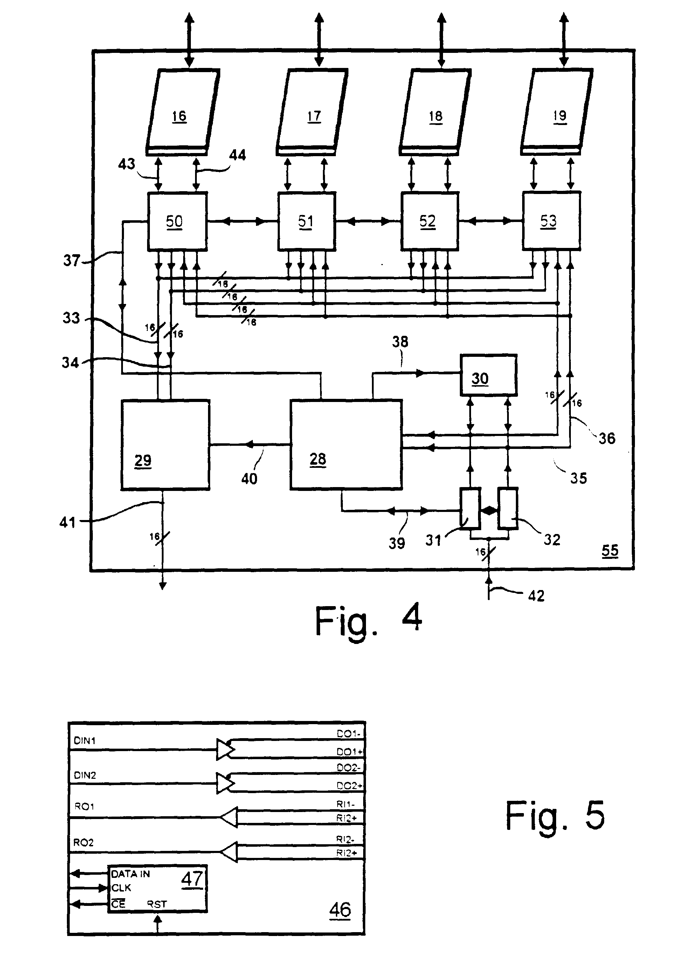

Lorsqu'ils sont enfichés dans la carte de couplage 55 (figure 4), chacun de ces modules 16 à 19 est raccordé respectivement aux composants de type FPGA 50 à 53 par l'intermédiaire des liaisons 43 et 44. La liaison 43 permet à chaque composant de type FPGA d'accéder à la mémoire PROM du module correspondant pour lire les informations nécessaires à sa configuration, tandis que la liaison 44 permet l'échange des données.

Chaque composant 50 à 53 est connecté à quatre bus de 16 bits :
- un premier bus 33 sur lequel transitent les données acquises,
- un second bus 34 sur lequel transite le mot de contrôle associé à chaque donnée acquise,
- un troisième bus 35 permettant d'émettre des données, et
- un quatrième bus 36 sur lequel transite l'adresse associée à chaque donnée à émettre.

En acquisition, les données et leurs mots de contrôle respectifs arrivent sur un multiplexeur 29 permettant de transférer alternativement, une donnée et son mot de contrôle sur le bus d'acquisition 41 de 16 bits à destination de l'unité de traitement.
Ce multiplexeur 29, ainsi que les composants 50 à 53 sont contrôlés respectivement, grâce aux liaisons 40 et 37, par un arbitre 28 de type PAL (tableau logique programmable) qui gère les accès aux bus 33 à 36.

En émission, les informations émises par l'unité de traitement sur le bus de 16 bits 42 sont constituées de mots de 16 bits représentant alternativement une donnée et son adresse de transfert. Ces informations sont stockées dans deux piles 31, 32 de type FIFO, contrôlées par l'arbitre 28, la pile 31 étant réservée aux données, tandis que l'autre pile 32 reçoit les adresses associées.
Chacune de ces données associée à son adresse est ensuite transférée dans une mémoire volatile 30 sous le contrôle de l'arbitre 28 avant d'être envoyée sur les bus 35 et 36 à destination d'un des composants 50 à 53 et du module 16 à 19 correspondant.

Le module 46 représenté sur la figure 5 est conçu pour assurer la connexion de quatre lignes externes de type RS422 utilisées en PCM, deux lignes différentielles (DO1+, DO1-) et (DO2+, DO2-) en émission et deux lignes différentielles (RI1+, RI1-) et (RI2+, RI2-) en réception. Ce module comprend une mémoire non volatile 47 de type PROM série, contrôlée par l'intermédiaire des lignes CLK, CE et RST et qui peut transférer les informations qui y sont mémorisées par la ligne DATA IN.

Pour une acquisition de type PCM, ces informations permettent de configurer l'interface programmable pour enchaîner les opérations suivantes à partir des données transitant sur la ligne externe de type RS422 :
- réception des données et synchronisation bit à bit, à partir des paramètres vitesse de transmission, nombre de bits par mots et type de codage de ligne,
- reconstitution des mots par comptage des bits,
- transcodage des données suivant le format utilisé sur le bus interne 33 et génération du mot de contrôle associé,
- demande d'accès aux bus internes 33 et 34, et
- émission de chaque donnée sur le bus 33 et de son mot de contrôle sur le bus 34.

En émission de type PCM, ces informations configurent l'interface programmable pour effectuer les opérations suivantes lorsque des données sont disponibles dans la mémoire 30 :
- demande d'accès aux bus 35 et 36 pour lire dans la mémoire 30, les données à émettre et leurs adresses,
- contrôle du nombre de données à envoyer par comparaison des adresses,
- codage des données, et
- génération de l'horloge d'émission et émission des données vers le module enfichable.

## Revendications

1. Dispositif pour le couplage d'un premier bus numérique (7) de transfert de données avec au moins un second bus de type quelconque (6),
ledit dispositif comprenant :
- une carte de couplage (1) assurant le transfert de données entre le premier bus (7) et le second bus (6),
- au moins un module enfichable dans la carte de couplage (3) connecté au second bus (6), et qui regroupe les caractéristiques électriques et logiques de ce dernier,
ladite carte de couplage (1) comprenant :
- au moins une interface programmable (2) connectée au premier bus (7), capable de s'adapter au protocole de communication du second bus (6), et
- des moyens de connexion capables de connecter le module enfichable (3) à l'interface programmable (2),
caractérisé en ce que ladite interface programmable (2) comprend au moins un composant intégrant des cellules logiques organisées en matrices et des cellules d'entrées/sorties, les interconnexions entre les cellules étant déterminées par des informations stockées dans une mémoire non volatile (4) située sur le module enfichable (3).

2. Dispositif selon la revendication 1,
caractérisé en ce que l'interface programmable (2) comprend des moyens pour lire les informations stockées dans ladite mémoire non volatile (4) de manière à configurer les interconnexions entre ses cellules, lors de sa mise sous tension.

3. Dispositif selon l'une des revendications 1 et 2,
caractérisé en ce que, dans le cas d'un transfert de données du premier bus (7) vers le second bus (6), l'interface programmable (2) est configurée de manière à effectuer successivement une sérialisation et un codage de données, conformément au protocole de communication du second bus (6).

4. Dispositif selon l'une des revendications 1 et 2,
caractérisé en ce que, dans le cas d'un transfert de données du second bus (6) vers le premier bus (7), l'interface programmable est configurée pour effectuer successivement une désérialisation et un décodage de données, conformément au protocole de communication du second bus (6).

5. Dispositif selon l'une des revendications précédentes,
caractérisé en ce qu'une partie des informations nécessaires à la configuration de l'interface programmable (2), est transmise à cette dernière par l'intermédiaire du premier bus (7).

6. Dispositif selon l'une des revendications précédentes,
caractérisé en ce que le module enfichable (3) comprend un circuit (5) réalisant l'interface électrique avec le second bus (6), et en ce que les moyens de connexion comprennent une première ligne série (8) permettant un transfert de données entre le second bus (6) et l'interface programmable (2) via le circuit d'interface électrique (5), et une seconde ligne série (9) permettant à l'interface programmable (2), lors de sa mise sous tension, d'accéder à la mémoire non volatile (4).

7. Dispositif selon la revendication 6,
caractérisé en ce que le module enfichable (10) comprend
- un circuit (11) réalisant l'interface électrique avec au moins une ligne analogique (14),
- un convertisseur analogique/numérique (12) inséré entre le circuit d'interface électrique (11) et la ligne série (8) permettant le transfert des données entre le second bus (14) et l'interface programmable (2), et
- une mémoire non volatile (13) qui vient se raccorder à la seconde ligne série (9) et dans laquelle sont stockées au moins une partie des informations de configuration de l'interface programmable (2).

8. Dispositif selon l'une des revendications précédentes,
caractérisé en ce que le premier bus (24) est connecté à une unité de traitement (25) à base de processeurs et de mémoires.

9. Dispositif selon la revendication 8,
caractérisé en ce que, lors de sa mise sous tension, ladite interface programmable (2) reçoit des paramètres de l'unité de traitement (25).

10. Dispositif selon l'une des revendications précédentes,
caractérisé en ce qu'un module enfichable (27) peut occuper simultanément les moyens de connexion de deux modules enfichables (22, 23) sur la carte de couplage (15) pour pouvoir réaliser une interface électrique complexe avec un bus.

11. Dispositif selon l'une des revendications précédentes,
caractérisé en ce que la carte de couplage (55) comprend quatre bus (33 à 36) qui relient chacune des interfaces matérielles (50 à 53) :
- un premier bus (33) sur lequel transitent les données acquises,
- un second bus (34) sur lequel transite un mot de contrôle associé à chaque donnée acquise,
- un troisième bus (35) permettant d'émettre des données, et
- un quatrième bus (36) sur lequel transite une adresse associée à chaque donnée à émettre.

12. Dispositif selon la revendication 11,
caractérisé en ce que la carte de couplage (55) est reliée à l'unité de traitement par un bus (41) dédié à l'acquisition de données et par un bus (42) dédié à l'émission de données.

13. Dispositif selon la revendication 12,
caractérisé en ce que le premier bus (33) et le second bus (34) sont connectés à un multiplexeur (29) contrôlé par un arbitre (28) permettant de transférer alternativement un mot de donnée et le mot de contrôle associé sur le bus (41) dédié à l'acquisition.

14. Dispositif selon l'une des revendications 12 et 13,
caractérisé en ce que le bus (42) dédié à l'émission est connecté à deux mémoires (31, 32) de type FIFO en parallèle, l'une recevant des mots de données et l'autre recevant leurs adresses respectives, ces deux mémoires (31, 32) étant lues simultanément pour transférer leur contenu respectivement sur le troisième bus (35) et le quatrième bus (36).

## Patentansprüche

1. Vorrichtung zur Kopplung einer ersten digitalen Datenübertragungs-Busleitung (7) mit mindestens einem zweiten Bus (6) beliebigen Typs, wobei die Vorrichtung aufweist:
- eine Koppelkarte (1), die die Übertragung von Daten zwischen dem ersten Bus (7) und dem zweiten Bus (6) gewährleistet,
- mindestens einen in die Koppelkarte einsteckbaren Modul (3), der mit dem zweiten Bus (6) verbunden ist und dessen elektrische und logische Eigenschaften zusammenfaßt,
wobei die Koppelkarte (1) enthält:
- mindestens eine programmierbare Schnittstelle (2), die mit dem ersten Bus (7) verbunden ist und sich an das Kommunikationsprotokoll der zweiten Busleitung (6) anpassen kann, und
- Verbindungsmittel, die den einsteckbaren Modul (3) mit der programmierbaren Schnittstelle (2) verbinden können,
dadurch gekennzeichnet, daß die programmierbare Schnittstelle (2) mindestens ein Bauteil aufweist, das matrixartig angeordnete logische Zellen und Eingabe-Ausgabe-Zellen enthält, wobei die Verbindungen zwischen den Zellen von Informationen bestimmt werden, die in einem nicht-flüchtigen Speicher (4) gespeichert sind, der sich auf dem einsteckbaren Modul (3) befindet.

2. Vorrichtung nach Anspruch 1, dadurch gekennzeichnet, daß die programmierbare Schnittstelle (2) Mittel zum Lesen der im nicht-flüchtigen Speicher (4) gespeicherten Informationen enthält, um bei ihrem Unterspannungsetzen die Verbindungen zwischen ihren Zellen zu konfigurieren.

3. Vorrichtung nach einem der Ansprüche 1 und 2, dadurch gekennzeichnet, daß bei einer Übertragung von Daten vom ersten Bus (7) zum zweiten Bus (6) die programmierbare Schnittstelle (2) so konfiguriert wird, daß sie nacheinander eine Serialisierung und eine Datenkodierung durchführt, entsprechend dem Kommunikationsprotokoll der zweiten Busleitung (6).

4. Vorrichtung nach einem der Ansprüche 1 und 2, dadurch gekennzeichnet, daß bei einer Übertragung von Daten vom zweiten Bus (6) zum ersten Bus (7) die programmierbare Schnittstelle (2) so konfiguriert wird, daß sie nacheinander eine Parallelisierung und eine Daten-Dekodierung durchführt, entsprechend dem Kommunikationsprotokoll der zweiten Busleitung (6).

5. Vorrichtung nach einem der vorhergehenden Ansprüche, dadurch gekennzeichnet, daß ein Teil der für die Konfiguration der programmierbaren Schnittstelle (2) notwendigen Informationen über den ersten Bus (7) zu dieser Schnittstelle übertragen wird.

6. Vorrichtung nach einem der vorhergehenden Ansprüche, dadurch gekennzeichnet, daß der einsteckbare Modul (3) eine Schaltung (5) enthält, die die elektrische Schnittstelle mit dem zweiten Bus (6) herstellt, und daß die Verbindungsmittel eine erste Serien-Leitung (8), die eine Datenübertragung zwischen dem zweiten Bus (6) und der programmierbaren Schnittstelle (2) über die elektrische Schnittstellenschaltung (5) ermöglicht, und eine zweite Serien-Leitung (9) enthalten, die es der programmierbaren Schnittstelle (2) bei ihrem Unterspannungsetzen ermöglichen, zum nicht-flüchtigen Speicher (4) Zugriff zu erhalten.

7. Vorrichtung nach Anspruch 6, dadurch gekennzeichnet, daß der einsteckbare Modul (10) aufweist
- eine Schaltung (11), die die elektrische Schnittstelle mit mindestens einer analogen Leitung (14) herstellt,
- einen Analog-Digital-Wandler (12), der zwischen die elektrische Schnittstellenschaltung (11) und die serielle Leitung (8) eingefügt ist und die Übertragung der Daten zwischen dem zweiten Bus (14) und der programmierbaren Schnittstelle (2) ermöglicht, und
- einen nicht-flüchtigen Speicher (13), der an die zweite serielle Leitung (9) angeschlossen ist und in dem mindestens ein Teil der Konfigurations-Informationen der programmierbaren Schnittstelle (2) gespeichert ist.

8. Vorrichtung nach einem der vorhergehenden Ansprüche, dadurch gekennzeichnet, daß der erste Bus (24) mit einer Verarbeitungseinheit (25) auf der Basis von Prozessoren und Speichern verbunden ist.

9. Vorrichtung nach Anspruch 8, dadurch gekennzeichnet, daß die programmierbare Schnittstelle (2) bei ihrem Unterspannungsetzen Parameter von der Verarbeitungseinheit (25) empfängt.

10. Vorrichtung nach einem der vorhergehenden Ansprüche, dadurch gekennzeichnet, daß ein einsteckbarer Modul (27) gleichzeitig die Verbindungsmittel von zwei einsteckbaren Modulen (22, 23) auf der Koppelkarte (15) besetzen kann, um eine komplexe elektrische Schnittstellenverbindung mit einem Bus durchführen zu können.

11. Vorrichtung nach einem der vorhergehenden Ansprüche, dadurch gekennzeichnet, daß die Koppelkarte (55) vier Busleitungen (33 bis 36) aufweist, die je Hardware-Schnittstellen (50 bis 53) verbinden:
- einen ersten Bus (33), auf dem die erfaßten Daten übertragen werden,
- einen zweiten Bus (34), auf dem ein jedem erfaßten Datenwert zugeordnetes Kontrollwort übertragen wird,
- einen dritten Bus (35), der das Aussenden von Daten ermöglicht, und
- einen vierten Bus (36), auf dem eine jedem zu sendenden Datenwert zugeordnete Adresse übertragen wird.

12. Vorrichtung nach Anspruch 11, dadurch gekennzeichnet, daß die Koppelkarte (55) mit der Verarbeitungseinheit über einen Bus (41), der der Erfassung von Daten dient, und über einen Bus (42) verbunden ist, der der Aussendung von Daten dient.

13. Vorrichtung nach Anspruch 12, dadurch gekennzeichnet, daß der erste Bus (33) und der zweite Bus (34) mit einem von einem Arbiter (28) gesteuerten Multiplexer (29) verbunden sind, der es ermöglicht, abwechselnd ein Datenwort bzw. das zugeordnete Kontrollwort auf dem der Erfassung dienenden Bus (41) zu übertragen.

14. Vorrichtung nach einem der Ansprüche 12 und 13, dadurch gekennzeichnet, daß der der Aussendung zugeordnete Bus (42) mit zwei FIFO-Speichern (31, 32) parallel verbunden ist, von denen der eine Datenwörter und der andere ihre jeweiligen Adressen empfängt, wobei diese beiden Speicher (31, 32) gleichzeitig gelesen werden, um ihren Inhalt zum dritten Bus (35) bzw. zum vierten Bus (36) zu übertragen.

## Claims

1. Device for the coupling of a first digital data transfer bus (7) with at least one second bus of any type whatsoever (6), said device comprising:
- a coupling board (1) ensuring data transfer between the first bus (7) and the second bus (6),
- at least one module (3), that can be plugged into the coupling board, is connected to the second bus (6), and has the electric and logic features of the latter;
said coupling board (1) comprising:
- at least one programmable interface (2) connected to the first bus (7), capable of adapting itself to the communications protocol of the second bus (6), and
- a connection means capable of connecting the plug-in module (3) to the programmable interface (2),
characterised in that said programmable interface (2) comprises at least one component integrating logic cells organised in matrixes and input/output cells, the interconnections between the cells being determined by information stored in a non-volatile memory (4) situated on the plug-in module (3).

2. Device as claimed in claim 1, characterized in that the programmable interface (2) comprises a means for reading the information stored in said non-volatile memory (4) so as to configure the interconnections between its cells, when it is powered up.

3. Device as claimed in either claim 1 or claim 2, characterized in that, in the case of a data transfer from the first bus (7) to the second bus (6), the programmable interface (2) is configured to successively perform a serializing and a coding of the data, in compliance with the communications protocol of the second bus (6).

4. Device as claimed in either claim 1 or claim 2, characterized in that, in the case of a data transfer from the second bus (6) to the first bus (7), the programmable interface is configured to successively perform a deserialising and a decoding of the data, in compliance with the communications protocol of the second bus (6).

5. Device as claimed in any one of the previous claims, characterized in that part of the information required to configure the programmable interface (2) is transmitted to the latter via the first bus (7).

6. Device as claimed in any one of the previous claims, characterized in that the plug-in module (3) comprises a circuit (5) serving as electric interface with the second bus (6), and in that the connection means comprises a first series line (8) enabling data transfer between the second bus (6) and the programmable interface (2) via the electric interfacing circuit (5), and a second series line (9) enabling the programmable interface (2), upon being powered up, to access the non-volatile memory (4).

7. Device as claimed in claim 6, characterized in that the plug-in module (10) comprises:
- a circuit (11) serving as electric interface with at least one analog line (14),
- an analog-to-digital converter (12) inserted between the electric interfacing circuit (11) and the series line (8) enabling data transfer between the second bus (14) and the programmable interface (2), and
- a non-volatile memory (13) which connects to the second series line (9) and in which is stored at least part of the information for configuring the programmable interface (2).

8. Device as claimed in any one of the previous claims, characterized in that the first bus (24) is connected to a processing unit (25) based on processors and memories.

9. Device as claimed in claim 8, characterized in that, upon being powered up, said programmable interface (2) receives parameters from the processing unit (25).

10. Device as claimed in any one of the previous claims, characterized in that a plug-in module (27) can simultaneously occupy the connection means of two plug-in modules (22, 23) on the coupling board (15) in order to establish a complex electric interface with a bus.

11. Device as claimed in any one of the previous claims, characterized in that the coupling board (55) comprises four buses (33 to 36) each connecting hardware interfaces (50 to 53):
- a first bus (33) on which the acquired data transit,
- a second bus (34) on which transits a check word associated with each acquired datum,
- a third bus (35) enabling data to be transmitted, and
- a fourth bus (36) on which transits an address associated with each datum to be transmitted.

12. Device as claimed in claim 11, characterized in that the coupling board (55) is connected to the processing unit via a bus (41) dedicated to the acquisition of data, and via a bus (42) dedicated to the transmission of data.

13. Device as claimed in claim 12, characterized in that the first bus (33) and the second bus (34) are connected to a multiplexer (29) controlled by an arbiter (28) enabling the alternate transfer of a data word and the associated check word on the bus (41) dedicated to acquisition.

14. Device as claimed in claim 12 or claim 13, characterized in that the bus (42) dedicated to transmission is connected to two FIFO type memories (31, 32) mounted in parallel, one receiving data words and the other receiving their respective addresses, these two memories (31, 32) being read simultaneously to transfer their contents on the third bus (35) and fourth bus (36) respectively.
